# EUROPÄISCHE PATENTANMELDUNG

(11) **EP 1 457 252 A1**
(43) Veröffentlichungstag der Anmeldung: **15.09.2004**
(21) Anmeldenummer: 03450065.2
(22) Anmeldetag: 13.03.2003
(51) Int. Cl.: B01D 69/00, B01D 53/22, B01D 71/02

(54) **Feinststrukturiertes Plastron-ähnliches Membranmaterial**

(71) Anmelder: Knoglinger, Johann, Dr., 4910 Ried i.l. (AT)
(72) Erfinder: Knoglinger, Johann, Dr., 4910 Ried i.l. (AT)

(57) **Zusammenfassung**

Eine technische Nachbildung der Plastron-Atmungsorgane von unter Wasser lebenden Insekten wird vorgesellt, wobei die Oberflächen dieser plastronähnlichen Formkörper so wie in der Natur Mikrometer- und Submikrometer-Strukturen aufweisen. Die technische Realisierung gelingt durch Verwendung von "track-etched"- oder keramischen-Mikrofiltrationsmembranen als Negativ-Vorlagen zur Abformung der äuseren Grundstruktur dieser Formköper. Die "track-etch"-Technologie wird auch als eine der Möglichkeiten zur Schaffung von Poren in der Grundfläche der plastronähnlichen Formköper vorgeschlagen. Diese Formköper können sowohl für den Stoffaustauch zwischen Gas- und Flüssigphasen als auch für Zwecke der Mikrofiltration eingesetzt werden.

## Beschreibung

Zum Stand der Technik ist anzumerken, daß in einem vorhergehenden Patent (AT 410.404) das Aussehen eines Plastron-ähnlichen Formkörpers beschrieben wurde, dessen natürliches Vorbild die Plastron-Atmungsorgane von unter Wasser lebenden Insekten sind. Dieser Formkörper ist dadurch charakterisiert, daß eine Grundfläche mit flüssigkeitsabweisenden Fasern (Härchen) besetzt ist und gleichzeitig diese Grundfläche gasdurchlässig ist. Durch den flüssigkeitsabweisenden Charakter der Oberflächenhärchen wird auch nach vollkommenem Eintauchen in eine Flüssigkeit ein Gaspolster zwischen den Härchen aufrecht erhalten und wegen der Gasdurchlässigkeit der Trägerfläche kann ein Gasaustausch zwischen der Flüssigkeit auf der einen Seite und dem Gas auf der anderen Seite des Plastron-ähnlichen Formkörpers an der von den Härchen gestützten Flüssigkeits-/Gas-Grenzfläche in direkter Weise erfolgen. Demgemäß bezieht sich die hier dargestellte Erfindung auf das technische Gebiet des Gasaustausches zwischen Flüssigkeiten und Gasen. Weitere Anwendungsgebiete für plastronähnliche Formkörper können - so wie weiter unten beschrieben - auch auf dem Sektor der Mikrofiltration liegen.

Im erwähnten Patent wurde auch ein möglicher Herstellungsweg durch elektrostatische Beflockung des Grundkörpers beschrieben. Diese Methode hat jedoch einige Einschränkungen, da die einsetzbaren Beflockungsmaterialien - so wie sie kommerziell erhältlich sind - in ihren physikalischen Abmessungen deutlich dicker und länger sind als die wasserabweisenden Härchen, welche in natürlichen Plastron-Atmungsorganen typischerweise vorgefunden werden. In der Fachliteratur ("Plastron respiration in bugs and beetles", J. Insect Physiol., 1976, Vol.22, pp.1529-1550) wird eine typische Gesamtlänge der Plastron-Härchen von ca. 5 µm und ein mittlerer Durchmesser von 0,4 µm bei einer mittleren Dichte von 4,3 x 10^6 / mm² angeführt. Das Ziel des vorliegenden Patentantrages ist es, einen möglichen Weg darzulegen, wie solche feinen Mikrostrukturen bei plastronähnlichen Formkörpern technisch realisierbar sind. Dies stellt einen Fortschritt ueber den bisherigen Stand der Technik dar, welcher derart feine Strukturen nicht verwirklichen konnte.

Der vorgeschlagene Lösungsweg basiert auf der Verwendung von Mikro- oder Nanofiltrationsmembranen mit geraden Porenkanälen ("track-etched" Membranen, ANOPORE®-Membranen, ...) als "Negativ"-Form zur Herstellung der Plastron-ähnlichen Grundstruktur. Gleichzeitig wird auch die "track-etch"-Technologie als eine mögliche Herstellungsart für Poren in der Grundfläche des Plastron-ähnlichen Formkörpers selbst vorgeschlagen. Die angeführten Filtrationsfolien besitzen Porendurchmesser, Porendichten und Porenlängen, welche in der Größenordnung der natürlichen Plastron-Härchen liegen und welche deshalb als Matrize zur Abformung Plastron-ähnlicher Formkörper nach bekannten Techniken geeignet sind.

Bei der "track-etch"-Technik (das wesentliche Grundpatent ist US 3,303,085) wird ein dafür geeignetes Polymer - häufig in einem Kernreaktor - mit Spaltungsprodukten oder mit hochgeladenen Ionen bestrahlt, sodaß in den bestrahlten flächenartigen Gebilden Spuren des Partikelbeschusses übrigbleiben. Diese geschädigten Regionen lassen sich leichter ätzen als das unbestrahlte Grundmaterial und mit einigen in der Patentliteratur beschriebenen technischen Finessen (US 3,673,017; US 3,713,921; US 3,802,972) gelingt es geradlinige, zylindrische Kanäle im bestrahlten Flächengebilde herauszuätzen. Von der Firma Osmonics wird beispielsweise eine track-etched Polycarbonatmembran für Mikrofiltrationen mit einer Dicke von 10µm bei einem Porendurchmesser von 0,2µm und einer Porendichte von 3 x 10^6 / mm² kommerziell angeboten (http://www.osmonics.com/products/Page322.htm). Durch Nachätzen kann sowohl der Porendurchmesser vergrößert als auch die Foliendicke reduziert werden. Auch Sonderanfertigungen werden von dieser Firma bei Bedarf hergestellt, sodaß die geeigneten Vorlagen für die Abformung plastronähnlicher Formkörper mit natumahen technischen Charakteristika verfügbar sind.

Bereits im Originalpatent US 3,303,085 war die Möglichkeit der Füllung der herausgeätzten Löcher mit Fremdmaterialien beschrieben worden. Diese Technik der Synthese von Nanopartikeln innerhalb der Poren einer porösen Membran ist als "Template Synthesis" bekannt, wobei die Nanopartikel entweder in der Membran verbleiben und ein Kompositmaterial mit interessanten neuen Eigenschaften gebildet wird oder die Membran zur Gewinnung der zylindrischen Nanopartikel weggeätzt wird (Preston, C.K.; Moskovits, M.J.; Phys. Chem., **1993**, 97, p.8495-503; Martin, C.R., Chem. Mater., **1996**, 8, p.1739-46) . Die Befüllung der Membranporen kann auf elektrochemischem Weg durch Reduktion von Ionen in einem elektrischen Feld an einer mit der Mikrofiltrationsmembran überzogenen Kathode erfolgen, wobei nach Ausfüllung der Porenkanäle der galvanische Prozeß abgestellt wird.

Für die Herstellung der Grundstruktur plastronähnlicher Formkörper kann der eben beschriebene elektrochemische Formprozess dazu benutzt werden, um zuerst einmal eine Positivkopie der Plastronkörper-Außenstruktur aus galvanisch abgeschiedenem Metall herzustellen. Dabei wird der eben beschriebene galvanische Abscheidungsprozess an Mikrofiltrationsmembranen natürlich über die Befüllung der Membranporen hinaus fortgesetzt, sodaß zusätzlich eine stabile metallische Grundfläche über den mit galvanisch abgeschiedenem Material befüllten Poren entsteht. In Spezialfällen kann diese metallische Galvanokopie auch bereits den Grundkörper (Rohling) eines metallischen plastronähnlichen Formkörpers repräsentieren. Diese Metall-Kopie kann dann beispielsweise nach einigen in der Galvanokopie üblichen Zwischenschritten auf eine Präge- oder Gußwalze aufgezogen werden, womit in einem kontinuierlichen Prozeß lange Folienbänder mit Negativkopien der Plastronkörper-Außenstruktur in großer Zahl hergestellt werden können. Der Sinn dieses Umkopierens der "tracketched"-Membranen liegt darin, daß diese Mikrofiltrationsmembranen vergleichsweise teuer sind und ein billiger und/oder kontinuierlicher Prozeß mit wegwerfbarem Vorlagenmaterial und der Möglichkeit zur billigen Herstellung zahlreicher Kopien wünschenswert ist.

Die von der Metallvorlage erhaltenen Folienbänder mit einer Oberfläche, die dem Negativabdruck der Außenstruktur des Plastron-Formkörpers entspricht, dient dann als direkte Vorlage, um im nächsten Schritt daraus die Grundstruktur des plastronähnlichen Formkörpers herzustellen. Dies kann beispielsweise durch Abgießen mit dem Grundmaterial des plastronähnlichen Formkörpers geschehen, wobei Unter- und/oder Überdruck eingesetzt werden können, um die schmalen zylindrischen Vertiefungen in der Vorlage zu befüllen. Es kann auch ein Polymerisations- oder Vemetzungsprozeß auf der Negativ-Grundfolie durchgeführt werden, wenn die dafür nötigen Ausgangsmaterialien Eigenschaften besitzen (niedrige Viskosität, günstige Benetzungseigenschaften, ...), die eine Befüllung der zylindrischen Vertiefungen in der Vorlage erlauben. Auch an isostatisches Pressen bei geeigneten Temperaturen kann gedacht werden, wenn das Grundmaterial eine zu geringe Fließfähigkeit besitzt um unter sanfteren Bedingungen die Vertiefungen ausfüllen zu können. Die zur Formgebung benutzten Folienbänder werden schließlich mit einem geeigneten Lösungsmittel aufgelöst oder chemisch zersetzt (weggeätzt) oder physikalisch entfernt (z.B. durch Abziehen, Aufschmelzen, ...), sodaß ein Rohling des plastronähnlichen Formkörpers in seiner Grundstruktur übrigbleibt.

Natürlich kann anstatt des Umkopierens der "track-etch"-Membranfolie auf ein billigeres Grundmaterial auch der direkte Weg der Benutzung dieser Mikrofiltrationsmembran als eigentliche Guß- oder Abdruckvorlage benutzt werden, um daraus sofort die Außen-Grundstruktur eines plastron-ähnlichen Formkörpers in einer entsprechenden Abformtechnik herzustellen. Jedoch wird dieser Weg wegen der Kosten für die Mikrofiltrationsmembran und der zu geringen mechanischen Stabilität im Regelfall relativ teuer und unpraktisch sein.

Eine andere Klasse von Mikrofiltrationsmembranen mit geraden Poren stellen die ANOPORE®-Membranen dar, welche auf Aluminiumoxid basieren. Diese keramischen Membranen haben beispielsweise eine Dicke von 60 µm und einen Porendurchmesser von 0,2 µm bei einer Porendichte von 1 x 10^9 / cm² (http://www.2spi.com/catalog/spec_prep/anopore_ aluminium-oxide-membrane-filter.html). So wie oben mit "track-etched"-Mikrofiltrationsmembranen kann man auch an die Verwendung von geeigneten ANOPORE-Membranen zur Abformung von plastronähnlichen Grundstrukturen denken.

Ein wesentliches Merkmal plastronähnlicher Formkörper ist es, daß die mit feinen Härchen besetzte Grundfläche entweder direkt (Löcher, Poren, Schlitze, ...) oder indirekt (gaspermeable Grundmaterialien) für (spezifische) Gase durchlässig ist. Um diese Funktionalität zu erlangen bieten sich verschiedene Möglichkeiten an. Beim indirekten Weg werden in einfacher Weise gaspermeable Grundmaterialien eingesetzt. Beim direkten Weg kann die Herstellung von zylindrischen Poren im plastronähnlichen Grundkörper in verschiedener Art erfolgen. Genauso wie bei Membranfiltern kann dazu die "track-etch"-Technologie eingesetzt werden, das heißt, der plastronähnliche Grundkörper wird einer geeigneten ionischen Strahlung ausgesetzt und die geschädigten Bereiche werden nachfolgend herausgeätzt. Auch kann daran gedacht werden, kommerziell erhältliches "track-etch"-Vormaterial für den plastronähnlichen Vorkörper zu verwenden, wobei im letzten Prozeßschritt (Abformung aus der Negativ-Vorlage) solche Bedingungen zu wählen sind, bei denen die Schädigungsspuren durch die Ionenstrahlen im "track-etch"-Grundmaterial nicht verloren gehen (z.B. durch isostatisches Pressen bei Temperaturen nicht zu weit oberhalb des Erweichungspunktes thermoplastischer Kunststoffe). Ein "track-etch"-Vormaterial wurde zwar bestrahlt, jedoch noch nicht ausgeätzt. Diese Vormaterialien sind in der Regel langdauemd beständig ohne ihre Schädigungs- und Ätzbarkeits-Charakteristik zu verlieren.

Eine andere Möglichkeit zur Herstellung von Poren im plastronartigen Grundkörper ist der Einsatz von Zweikomponenten-Materialien für diesen Formkörper, wobei in einem nachträglichen Prozeßschritt eine der zwei Komponenten herausgelöst wird (Auflösen, Ätzen, Herausschmelzen, ...), sodaß an den entsprechenden Orten gasdurchlässige Löcher übrigbleiben. Es bieten sich für die herauszulösende Komponente auch zylindrische Mikroteilchen aus "Template-Synthese"-Prozessen basierend auf Mikrofiltrationsmembranen an. In diesem Fall können auch direkt die gefüllten Mikrofiltrationsmembranen aus dem "Template-Synthese"-Prozeß als Material für den finalen Abformprozeß eingesetzt werden und aus dem so hergestellten Rohling dann das in den befüllten Poren befindliche Material herausgeätzt werden.

Wie im Originalpatent AT410.404 beschrieben, können auch physikalische Methoden wie Funkendurchschlag, Elektronenstrahlbohren/schneiden oder Laserstrahlbohren-/schneiden oder auch andere verwandte Techniken (z.B. Hochfrequenzentladungen durch das Material hindurch, ...) zur Herstellung physikalischer Öffnungen im plastronähnlichen Grundkörper herangezogen werden (US 4,923,608). Jedenfalls ist es so, daß die Dichte der Gasdurchtrittsöffnungen im plastronähnlichen Formkörper wegen der hohen Beweglichkeit von Gasen viel geringer sein kann als die Dichte der Härchen an der Oberfläche des plastronähnlichen Formkörpers, wenn an das Einsatzgebiet des Gasaustausches bei Flüssigkeiten gedacht wird.

Geeignet ausgelegte plastronähnliche Formkörper mit definierten Poren in der Grundfläche können auch als Mikrofiltrationsmembranen eingesetzt werden, wobei sie dann als Mischtyp zwischen oberflächen- und tiefenfiltrierenden Membranen anzusehen sind. Für diesen Einsatzzweck wird das zu filtrierende Medium von der mit Härchen besetzten Seite her durch den plastronähnlichen Formkörper mit einem ausreichend hohen Druck hindurchgepreßt. Die mechanischen Poren im Grundkörper führen eine definierte Mikrofiltration aus, während die darüberliegenden Härchen als Tiefenfilter wirken und große Teilchen von der Verstopfung der darunterliegenden Poren abhalten.

Solche gemischten Mikrofilter auf Basis plastronähnlicher Formkörper sind sowohl für Gase als auch für Flüssigkeiten geeignet. Für den Einsatzzweck der Mikrofiltration muß die Dichte der Poren in der Grundstruktur des plastronähnlichen Formkörpers mindestens in der gleichen Größenordnung wie die Dichte der Oberflächenhärchen liegen. Der Vorteil einer Mikrofiltrationsmembran in der Art eines plastronähnlichen Formkörpers liegt in der scharf definierten Filtrationscharakteristik aufgrund der mit entsprechenden Techniken (z.B. "track-etching") hergestellten Poren in der Grundfläche bei gleichzeitig geringer Neigung zur Verstopfung aufgrund der Vorseparation größerer Teilchen an den Härchen des plastronähnlichen Formkörpers.

Wie bereits im Originalpatent AT410.404 angemerkt, so kann auch bei den hier beschriebenen feiner strukturierten plastronartigen Formkörpern die Anbringung hydrophober Eigenschaften nachträglich erfolgen (z.B. durch Fluorierung oder Plasmabehandlung an der bereits mit Härchen besetzten fertigen Oberfläche).

## Patentansprüche

1. Eine Struktur mit einem ähnlichen Aufbau wie die Plastron-Atmungsorgane bestimmter Wasserinsekten ("plastronähnlicher Formkörper"), **dadurch gekennzeichnet, daß** flüssigkeitsabweisende Mikrofasern (Härchen) auf der einen Seite einer Grundfläche angebracht sind und daß diese Härchentragende Fläche für Gase zumindest teildurchlässig ist und daß die Abmessungen und die Dichte der Härchen an der Oberfläche in einem Bereich wie bei den natürlichen Plastron-Atmungsorganen liegen, d.h. Härchendurchmesser von 0,05µm bis 10µm, Härchenlänge von 0,5µm bis 200µm, Härchendichte von 1 x 10^7 / cm² bis 1 x 10^10 / cm².

2. Verfahren zur Herstellung einer äußeren Struktur nach Anspruch 1, **dadurch gekennzeichnet, daß** "track-etched"-Mikro- oder Nanofiltrationsmembranen als Negativvorlage zur Abformung einer Positivvorlage aus Metall oder direkt zur Abformung eines metallischen Formkörperrohlings verwendet werden.

3. Verfahren zur Herstellung einer äußeren Struktur nach Anspruch 1, **dadurch gekennzeichnet, daß** keramische Mikro- oder Nanofiltrationsmembranen als Negativvorlage zur Abformung einer Positivvorlage aus Metall oder direkt zur Abformung eines metallischen Formkörperrohlings verwendet werden.

4. Verfahren nach Anspruch 2 und 3, **dadurch gekennzeichnet, daß** die Abformung auf galvanischem Weg durch Abscheidung des Metalls an einer mit der Mikro- oder Nanofiltrationsmembran überzogenen Kathode erfolgt.

5. Verfahren nach Anspruch 2, 3 und 4, **dadurch gekennzeichnet, daß** die metallische Positivvorlage dazu benutzt wird, um daraus wiederum eine Negativvorlage von der Außenseite des plastronähnlichen Formkörpers aus billigerem Material und in größerer Anzahl und/oder mit größeren Abmessungen herzustellen und diese vervielfaeltigten und/oder vergroesserten Negativvorlagen zur Abformung von weiteren Rohlingen des plastronaehnlichen Formkörpers mit groesseren Abmessungen geeignet sind

6. Verfahren nach Anspruch 1, **dadurch gekennzeichnet, daß** die Poren in der Grundfläche des plastronähnlichen Formkörpers durch Einsatz der "tracketch"-Technologie hergestellt werden

7. Verfahren nach Anspruch 1 und 5, **dadurch gekennzeichnet, daß** als Grundmaterial für den finalen Abformungsprozess Stoffe verwendet werden, die für spezifische Gase permeabel sind.

8. Verfahren zur Herstellung gasdurchlässiger Poren im Rohling des plastronähnlichen Formkörper nach Anspruch 1 und 5, **dadurch gekennzeichnet, daß** als Grundmaterial für den finalen Abformungsprozeß ein Zweikomponentengemisch verwendet wird, das so beschaffen ist, daß nachfolgend eine der Komponenten unter Zurücklassung von Poren entfernt werden kann (Auflösung, Ausätzung, Aufschmelzung, ...).

9. Verfahren nach Anspruch 1, **dadurch gekennzeichnet, daß** die Poren in der Grundfläche des plastronähnlichen Formkörpers durch Hochfrequenzentladungen durch diese Grundfläche hindurch hergestellt werden.

10. Verwendung plastronähnlicher Formkörper für Zwecke der Mikround Nanofiltration.
